# EUROPEAN PATENT SPECIFICATION

(11) **EP 3 970 479 B1**
(45) Date of publication and mention of the grant of the patent: **26.10.2022**
(21) Application number: 21172332.5
(22) Date of filing: 05.05.2021
(51) Int. Cl.: A01G 31/06, A01G 9/24, A01G 27/02, A01G 31/04

(54) **SYSTEM FOR VERTICAL FARMING AND METHOD FOR GROWING PLANTS**
SYSTEM FÜR VERTIKALE LANDWIRTSCHAFT UND VERFAHREN ZUM ZÜCHTEN VON PFLANZEN
SYSTÈME POUR AGRICULTURE VERTICALE ET PROCÉDÉ DE CULTURE DE PLANTES

(30) Priority: 22.09.2020 EP 20197438
(43) Date of publication of application: 23.03.2022
(73) Proprietor: Mana Farms GmbH, 04179 Leipzig (DE)
(72) Inventor: DASER, Richard, 04229 Leipzig (DE); SCHARDT, Raphael, 96268 Mitwitz (DE)
(74) Representative: Seemann & Partner Patentanwälte mbB

(56) References cited:
- WO-A1-2017/024353
- JP-A- 2018 007 652
- US-A1- 2018 368 346
- US-B2- 10 694 688

## Description

The invention relates to a plant growing system for vertical farming and a method for growing plants with a plant growing system for vertical farming.

With the introduction of artificial fertilizers and pesticides to agriculture, an enormous increase in productivity has become possible. However, this comes at the expense of the environment. The result is huge monocultures, which are kept sterile by pesticides. Furthermore, traditional agriculture is characterized by an extremely inefficient logistics system, as agriculture products are often transported over long distance.

The transport, the use of pesticides and excessive water consumption quickly are major downsides of traditional agriculture, especially in the cultivation of plants with high water content. A solution to this problem is on the one hand the cultivation in several, vertically stacked levels, known as vertical farming, and on the other hand the cultivation in a closed, optimized and controllable environment, known as controlled environment agriculture (CEA).

In the first stages of experimentation with vertical farming it was difficult to grow food for the same or a lower price than with traditional farming methods. Nowadays there are some types of vegetables that can now be produced much cheaper in a vertical farm compared to a traditional farm. On the one hand this is due to the optimization of vertical farm systems, on the other hand this can be attributed to an improved efficiency of LEDs as light sources and the availability of cheap ecological electricity.

One central problem of vertical and indoor farms, or CEA in general, is the heat management of the system. It is a major challenge when constructing CEA facilities and devices. Due to artificial light sources and high light intensity demands of certain plants as well as vertical or narrow stacking, power densities are high, usually in the range of 300-700 W/m³. Most systems use air cooling for the light sources. To control the temperature and humidity in the controlled environment as well as removing the heat from the light sources most CEA facilities or devices utilize air based heating, ventilation, and air conditioning (HVAC) heat pumps, which are also known as air conditioners.

Air in contrast to water has quite a low heat capacity, especially per volume, and a 50 times lower heat conductivity. Therefore, to efficiently remove a lot of power thermally in a confined, small space like a vertical farm, a lot of air has to be moved fast. This is not ideal for a plant containment and growing system.

Another important aspect in vertical farming is the harvesting of the plants and the seeding of new plants. Especially in tightly stacked racks of plants this process can be quite time consuming.

WO 2017/024353 A1 discloses high density horticulture growing systems, methods and apparatus. A first conveying device moves containers horizontally from a crop planting area to one or more modular racks. A second conveying device moves the containers from each rack to a crop storage area.

JP 2018 007 652 A discloses a hydroponic cultivating apparatus capable of cultivating plants efficiently by performing temperature control while supplying light and nutrients inside a cultivation area.

US 10 694 688 B2 discloses a hydroponic cultivation system with a plurality of vessels extending in a predetermined direction and a plant holding plate that holds plants and is disposed to span across the plurality of vessels.

It is the object of the present invention to provide a way to improve the harvesting and seeding of plants in a vertical farming system, while at the same time efficiently managing the heat in the system, reducing complexity and operational expenses, and improving the growing environment for the plants.

This object is solved by a system for vertical farming, comprising at least one plant containment device, at least one light source and a frame with at least one rail extending horizontally from a back wall of the frame, wherein the at least one plant containment device comprises a plant holding compartment to hold at least one plant and an irrigation channel, wherein the at least one light source is arranged on a bottom side of the at least one rail, wherein a top side of the rail is shaped complementary to a bottom side of the plant containment device, wherein the plant containment device is configured to be arranged on the top side of the rail without fixing it to the rail, wherein the plant growing system is configured to control the temperature of the air surrounding the plant containment device by regulating the temperature of a liquid working medium circulated through the irrigation channel, wherein the at least one rail is shaped as a beam extending horizontally from the back wall of the frame in a direction parallel to a flowing direction of a liquid working medium inside the irrigation channel, wherein one side of the plant containment device comprises a outwardly protruding, downwardly sloped connection port for the irrigation channel, wherein a side wall of the frame comprises a corresponding drain in the shape of a hole, wherein the connection port is shaped and configured to create a watertight connection with the drain when pushed into the drain.

By shaping the top side of the rail complementary to the bottom side of the plant containment device, the plant containment device is held in place without the use of fastening elements or other fastening means. This allows for a fast and easy exchange of plant containment devices without the need of tools, when the plants in the plant containment devices are ready to be harvested. By attaching the at least one light source to the rail rather than to the plant containment device, no electric connections need to be disconnected when exchanging the plant containment device. In particular, the plant containment device is arranged on the top side of the rail, wherein there are no fastening elements fixing the plant containment device to the rail.

Controlling the air temperature by regulating the temperature of the liquid working medium allows for an easy, efficient and cost effective way to control the environment temperature of the plant growing system. In particular, the plant containment device is configured to thermally couple the liquid working medium to the surrounding air and/or the light sources. In particular, the irrigation channel is in thermal contact with an outer hull of the plant containment device. In particular, the at least one light source is in thermal contact with the at least one rail, wherein the at least one rail is in thermal contact with the at least one plant containment device, while the at least one plant containment device is placed on the top side of the rail.

In the context of the specifications, placing the plant containment device on the top side of the rail "without fixing it to the rail" means that there are no fastening elements connecting the plant containment device to the rail.

In the context of the specification the expression "shaped complementary to" is to be understood as a shape of a first object being formed to follow the shape of a second object. For example, if a top part of the second object is shaped as trough, the bottom part of the first object will be shaped to essentially match this trough shape. If the top part of the second object is a flat surface, the bottom part of the first object will also be a flat surface.

In particular, the top side of the rail is a flat surface and the bottom side of the plant containment device is a flat surface, wherein the rail comprises laterally placed wings to prevent lateral movement of the plant containment device.

In particular, the irrigation channel and the plant containment device are not separated by a wall. In other words, the irrigation channel runs directly through the plant holding compartment. According to an embodiment, the irrigation compartment is shaped as a single chamber with the plant holding compartment. In particular, the plant containment device is held on top of the rail without the use of fastening elements.

The irrigation channel is shaped to hold a liquid working medium (LWM). The liquid working medium comprises in particular a nutrient solution and/or water and/or glycerine and/or alcohol and/or a disinfectant.

In particular, the irrigation channel is configured to cool and/or heat the air outside the plant containment device. In particular, at least one of the walls of the irrigation channel forms an outer hull of the plant containment device. In this way, the liquid working medium inside the irrigation channel is used to regulate the temperature of the outside air.

The plant containment device is in particular a tray, a pot, a bucket, a tub or a similar container for plants. In particular, the light source is arranged on a thermal spreader of the rail consisting of a thermal conductive material, for example metal. In particular, the thermal spreader is a plate comprising aluminium. In particular, the thermal spreader comprises an aluminium housing and FR-4 material.

The plant holding compartment has in particular a root chamber at its bottom.

One side of the plant containment device comprises a outwardly protruding, downwardly sloped connection port for the irrigation channel, wherein a side wall of the frame comprises a corresponding drain in the shape of a hole, wherein the connection port is shaped and configured to create a watertight connection with the drain when pushed into the drain.

The outwardly protruding, downwardly sloped connection port in particular acts as an outlet for a liquid working medium circulating through the irrigation channel and further simplifies the exchange of the plant containment devices. To exchange the plant containment device, the liquid working medium supply to the inlet is closed as a first step. The slope acts as a downpipe that drains the liquid working medium from the connection port, allowing for a simple removal of the plant containment device without spillage. In particular, only one of the sides of the plant containment system comprises a connection port, while the opposing side does not. In particular, the plant containment device has no electrical connection. This further simplifies the exchange of the plant containment devices. In particular, the drain is connected to a downpipe to guide the liquid working medium to a reservoir. In particular, an inner wall of the downpipe is made of a thermal conductive material, in particular aluminium. Advantageously this improves a heat exchange between the liquid working medium and the air surrounding the plant containment devices.

Preferably the connection port comprises a valve, which is configured to close, when the connection port is removed from the drain. The valve prevents the liquid working medium from escaping the irrigation channel, when the connection port is disconnected from the drain. The valve may be designed as a dam to stop the liquid working medium from pouring out when the plant containment device is uncoupled. In particular, the plant containment device is tilted before uncoupling the connection port to let the liquid working medium flow away from the connection port and avoid spilling.

In particular, the plant containment device comprises a backside sealing and/or a front sealing to distribute the liquid working medium inside the irrigation channels. In particular, the connection port is integrated into the backside sealing or the front sealing. In particular, an inlet for the liquid working medium is connected to the backside sealing and/or a front sealing. The inlet is in particular fixed magnetically to the backside sealing or the front sealing to easily disconnect it from the plant containment device.

The rail is shaped as a beam extending horizontally from a back wall of the frame in a direction parallel to a flowing direction of a liquid working medium inside the irrigation channel. This arrangement allows easy access to the plant containment devices placed on the rails. In particular, the frame comprises two side walls, a cover, a bottom wall and a front door to create an enclosed space for the at least one rail and the at least one plant containment devices. In this case, the rails extend from the back wall in the direction of the front door.

The system preferably does not comprise an air conditioning device.

By controlling the temperature of the air surrounding the plant containment devices by regulating the temperature of the liquid working medium, an air conditioning can be omitted to save costs and energy.

Preferably the system is configured to regulate the temperature of the liquid working medium by controlling the heat output of the at least one light source, wherein heat emitted by the at least one light source is transmitted through the rail and an outer hull of the plant containment device to the liquid working medium.

By utilizing the heat of the light sources to heat the liquid working medium, a very energy efficient way to control the air temperature is presented. In particular, the at least one rail comprises a thermal spreader material, in particular a metal, in thermal contact which the at least one light source and the top side of the rail. In particular, in order to control the heat output of the at least one light source, the plant growing system is configured to activate the at least one light source during a daytime cycle and deactivating the at least one light source during a night cycle.

The system preferably comprises a cooling and heating device, which is configured to cool and/or heat a liquid working medium circulated through the irrigation channels, wherein the plant growing system is configured to measure the temperature of the liquid working medium periodically and activate the cooling and heating device, if the temperature of the liquid working medium exceeds a designated maximum temperature and/or falls below a designated minimum temperature.

The cooling and heating device offers an additional way to regulate the temperature of the liquid working medium and thus the air surrounding the plant containment devices. It is configured as a safety mechanism to keep the temperature of the liquid working medium inside a specified range. However, depending on the temperature outside the plant growing system, it may be possible to control the temperature of the liquid working medium only with the heat of the light sources without the need to activate the cooling and heating device.

Preferably the system comprises at least two layers of rails arranged vertically above one another, wherein each layer comprises at least two rails extending parallel to each other in a horizontal plane.

This setup is a very efficient and space saving arrangement that ensures that each plant containment device placed on the rails is sufficiently illuminated.

Preferably the system comprises a reservoir, configured to hold at least one liquid working medium, and at least one pump, wherein the at least one pump is configured to pump the liquid working medium to the at least one irrigation channel and in particular from the at least one irrigation channel back to the reservoir, wherein in particular at least one of the irrigation channels is configured to cool the at least one light source.

The liquid working medium is transported in a, in particular closed, irrigation cycle.

In particular, the plant growing system is a controlled environmental agriculture. In particular, the system comprises at least two reservoirs. Each reservoir may be filled with a different liquid working medium. In particular, each reservoir is connected to a separate irrigation cycle.

The at least one pump, the cooling and heating device and the reservoir form in particular a cooling cycle. This cooling cycle is in particular parallel to the irrigation cycle.

In particular, the cooling and heating device comprises a compressor based heat pump and/or a heat exchanger and/or an absorption based heat pump and/or a peltier heat pump. In particular, the cooling device comprises a heat exchanger and is coupled with a HVAC. The HVAC supplies cold water to the heat exchanger.

The cooling and heating device may be a temperature management device or may be part of the temperature management device. In particular, the temperature management device also controls ventilators and/or a HVAC to regulate the air temperature and/or the air humidity. The temperature management device is in particular a temperature management system, which may consist of many different components.

Preferably, the system comprises a grow control device with a master controller, at least one environmental sensor and a database with environmental data, wherein the grow control device is configured to measure a value of at least one environmental condition with the at least one environmental sensor and control the at least one light source and a distributor device to regulate the light, water and/or nutrients received by individual plants in the at least one plant containment device according to a comparison of the measured value of the at least one environmental condition with the environmental data, wherein in particular the grow control device controls the at least one light source and the distributor according to an algorithm, which is optimized by machine learning.

The master controller comprises for example a central processing unit or a microcontroller unit and is in particular configured to communicate with other devices wirelessly, for example via WIFI and/or Bluetooth and/or radio frequency and/or near-field communication. The database can be a built-in database or a cloud database.

In particular, the grow control device replicates different environmental conditions by using the environmental data to control the at least one light source, the distributor, and in particular the cooling device and/or a HVAC to control the air humidity, the light, the water temperature and the air temperature. The grow control device is in particular configured to allocate plants dynamically to the at least one plant containment device to optimize growth of the plants. The grow control device is in particular a grow control system, which may consist of many different components.

In particular, the system comprises a control device configured to control and regulate other devices of the system. The control device comprises a master controller, which can be the same master controller as the master controller of the grow control device or a separate master controller.

According to an embodiment, the system comprises a water mixing device connected with the reservoir, wherein the water mixing device comprises at least one substance container and at least one liquid property sensor configured to measure at least one property of the liquid working medium, in particular a pH and/or an electrical conductivity, wherein the water mixing device is configured to measure a value of the at least one property of the liquid working medium with the at least one liquid property sensor and add at least one substance from the at least one substance container to the liquid working medium, if the value is outside a specified range.

The water mixing device ensures, that the liquid properties of the liquid working medium are always inside a specified range. The at least one substance is in particular a liquefied fertilizer and/or a pH down substance, e.g. phosphoric acid, and/or a pH up substance and/or a pathogen, e.g. hydrogen peroxide. The water mixing device is in particular a water mixing system, which may consist of many different components.

The water mixing device may automatically measure the value of the at least one property of the liquid working medium and automatically add the at least one substance to the liquid working medium. Alternatively, measuring the value and/or adding the at least one substance is done manually. In both cases, the system calculates the required quantity of the at least one substance based on the measured value.

According to an embodiment, the system comprises an autonomous actuation device, in particular a robot and/or a conveyor and/or a transfer rail, wherein the autonomous actuation device is configured to move the plant containment devices and/or harvest and move plants.

The autonomous actuation device automates many tasks inside the system. In particular, it is configured to automatically pick up, hold, move, connect and/or disconnect the plant containment devices. The autonomous actuation device may also be configured to sow, harvest and serve plants to customers.

Preferably, the system comprises a controllable lighting device comprising the at least one light source, wherein the controllable lighting device is configured to control, in particular a direction of, the at least one light source to illuminate at least one plant in the at least one plant containment device with a specified light intensity and/or a specified light spectrum according to lighting data specified for the at least one plant and/or at least one type of plant.

In particular, the controllable lighting device is controlled according to lighting data, also called a light recipe, for a specific growth of a specific plant. The lighting data is saved in a database, in particular the database of the grow control device. The controllable lighting device consists in particular of light sources with different spectral composition, e.g. white LEDs with different correlated color temperature (CCT) and/or colored LEDs.

The system comprises in particular at least one cover, which covers at least one of the plant containment devices, in particular laterally. The at least one cover creates a closed environment for the at least one plant containment device, when the at least one cover is closed. Advantageously, by creating a closed environment the cover reduces the volume of the environmental air to be cooled or heated by the liquid working medium.

According to an embodiment, the system comprises at least two plant containment devices and is configured to highlight one of the at least two plant containment devices, which needs to be serviced, by individually lighting the plant containment device to be highlighted.

In particular, a plant containment device, which needs to be serviced, requires seeding and/or contains at least one plant, which is ready to be harvested, and/or contains at least one plant, which needs to be trimmed. Highlighting plant containment devices, which need to be seeded and/or contain harvestable plants and/or contain plants in need of trimming saves time when attending the plant growing system. In particular, to highlight the plant containment device, all light sources of the plant growing system not illuminating the plant containment device are turned off or are dimmed. Alternatively or additionally, the brightness of at least one of the light sources illuminating the plant containment device to be highlighted is increased. In particular, the plant containment device, which needs to be serviced, is only highlighted, when a cover of the plant growing system is opened. The cover may be a door or a lid or a similar device.

In particular, the system is configured to dim a particular light source when the cover covering a plant containment device with the particular light source and/or a lighting device with the particular light source is opened. In particular, the light is dimmed when a door to a room containing the at least one light source is opened. Dimming the light prevents the person from being blinded by high light intensities. The highlighting of harvestable plants and/or dimming of the at least one light source is in particular controlled by the directable lighting device.

According to an embodiment, the system comprises a directable ventilation device, in particular a directable ventilation system. The directable ventilation system is configured to control the air flow to optimized the plant growth. The directable ventilation device is configured to stop or dim the air flow in vicinity to a plant containment device, when a user approaches the plant containment device. In particular, the directable ventilation device is configured to stop or dim the air flow in vicinity to a plant containment device, when a door to a room containing the plant containment device is opened or a cover on the plant containment device is lifted.

According to a further embodiment, the system comprises a seedling box to grow seedlings. In particular, the seedling box comprises an inlet to supply the liquid working medium into the seedling box and a siphon to drain the liquid working medium. The seedling box is configured to rise and lower the liquid working medium level in the seedling box to realize an ebb and flow irrigation of the seedlings.

In particular, the system comprises a waste management device, which comprises sensor to detect rotten plants, wherein the waste management device is configured to remove rotten plants detected by the sensor, in particular with the autonomous actuation device.

The system further comprises in particular a water inlet to supply fresh water into the reservoir and/or a water drainage device with a water outlet to remove waste water or waste fluid from the reservoir. In particular, at least one filter is arranged in the irrigation cycle and/or the cooling cycle.

According to an embodiment, the system comprises a user interface, for example a touchscreen. The user interface is configured to display instructions and/or information about the system or the plants and/or provide a user input interface. In particular, the user interface provides the user a purchase interface, which allows the user to buy plants grown in the system. The purchased plants are in particular delivered to the user by the autonomous actuator device.

The object is further solved by a method for growing plants with a plant growing system for vertical farming with a system according to one of claims 1-9, wherein the temperature of the air surrounding the plant growing system is controlled by regulating the temperature of a liquid working medium circulated through an irrigation channel, which runs through a plant containment device of the plant growing system .

The method for growing plants incorporates the same features, advantages and properties as the inventive plant growing system according to any of claims 1-9.

Preferably, the temperature of the liquid working medium is regulated by controlling the heat output of at least one light source fixed to a rail of a frame of the plant growing system, wherein heat emitted by the at least one light source is transmitted through the rail and an outer hull of the plant containment device to the liquid working medium.

The temperature of the liquid working medium is preferably measured periodically, wherein a cooling and heating device, configured to cool and/or heat a liquid working medium circulated through the irrigation channels, is activated, if the temperature of the liquid working medium exceeds a designated maximum temperature and/or falls below a designated minimum temperature.

According to an embodiment the temperature of the liquid working medium is regulated by simulating a day and night cycle with consecutive daytime periods and nighttime periods, with the following steps:
- Activating the at least one light source at the beginning of the daytime period,
- During the daytime period, measuring the temperature of the liquid working medium and cooling the liquid working medium with the cooling and heating device, if the temperature of the liquid working medium exceeds a designated daytime maximum temperature,
- Deactivating the at least one light source at the beginning of the nighttime period,
- During the nighttime period, measuring the temperature of the liquid working medium and cooling the liquid working medium with the cooling and heating device, if the temperature of the liquid working medium exceeds a designated nighttime maximum temperature,
wherein the designated daytime maximum temperature is higher than the designated nighttime maximum temperature.

Advantageously by simulating a day and night cycle a natural temperature cycle is replicated. During the daytime periods the light sources are on and heat up the liquid working medium, which in turn heats up the surrounding air and a medium inside the plant holding compartment, if such a medium is utilized. At the transition between the daytime period to the nighttime period the light sources are turned off. The liquid working medium, the surrounding air and the medium inside the plant holding compartment will slowly cool down. The lowest temperature is reached just before the light sources are turned back on and the highest temperature during the last third of the daytime period. The temperature during daytime periods and nighttime periods are continuously monitored and the cooling and heating device is activated, if the measured temperature is outside the specified temperature range for a given period or timeframe of a period. To better represent the natural conditions and thus improve growth conditions, the specified temperature range for the daytime period is higher than for the nighttime period.

In particular, the daytime period lasts as long as a day and the night period as long as a night, so that the natural day and night cycle is replicated. In particular, the cycle of a daytime period and a nighttime period is repeated continuously.

According to an embodiment of the method, a growth of at least one of the plants is controlled by an algorithm regulating the air humidity and/or air temperature and/or liquid working medium temperature and/or light intensity and/or light spectrum of an environment of the plant, wherein the algorithm is optimized by machine learning using feedback information, in particular the size, the weight, the appearance and/or the taste of the plant.

By implementing an algorithm optimized by machine learning the plants can be specifically adapted to the needs of specific plants. The feedback information are utilized to continuously improve the algorithm, developing optimized lighting, optimized air flows, optimized temperatures and/or optimized humidity levels for each plant. In particular, the feedback information is inputted by a user in a user interface.

In particular, plant biographies are used as input data to improve the algorithm. Plant biographies include data about the growth, size, coloration and other parameters at different points in time.

Further characteristics of the invention will become apparent from the description of the embodiments according to the invention together with the claims and the included drawings. Embodiments according to the invention can fulfill individual characteristics or a combination of several characteristics.

The invention is described below, without restricting the general intent of the invention, based on exemplary embodiments, wherein reference is made expressly to the drawings with regard to the disclosure of all details according to the invention that are not explained in greater detail in the text. The drawings show in:
- Fig. 1: a schematic view of an embodiment of a plant growing system for vertical farming,
- Fig. 2a: a schematic view of plant containment device,
- Fig. 2b: a schematic view of a front sealing of a plant containment device,
- Fig. 2c: a schematic cross sectional view of a front sealing with a drain and a valve,
- Fig. 3: a schematic perspective view of a plant containment device placed on a rail,
- Fig. 4a: a schematic perspective view of a plant containment device placed on a rail,
- Fig. 4b: a schematic cross sectional view of a plant containment device placed on a rail,
- Fig. 5: a schematic view of an irrigation cycle and a cooling cycle of an embodiment of a plant growing system for vertical farming,
- Fig. 6: a schematic view of an electrical system of an embodiment of a plant growing system for vertical farming.

In the drawings, the same or similar types of elements or respectively corresponding parts are provided with the same reference numbers in order to prevent the item from needing to be reintroduced.

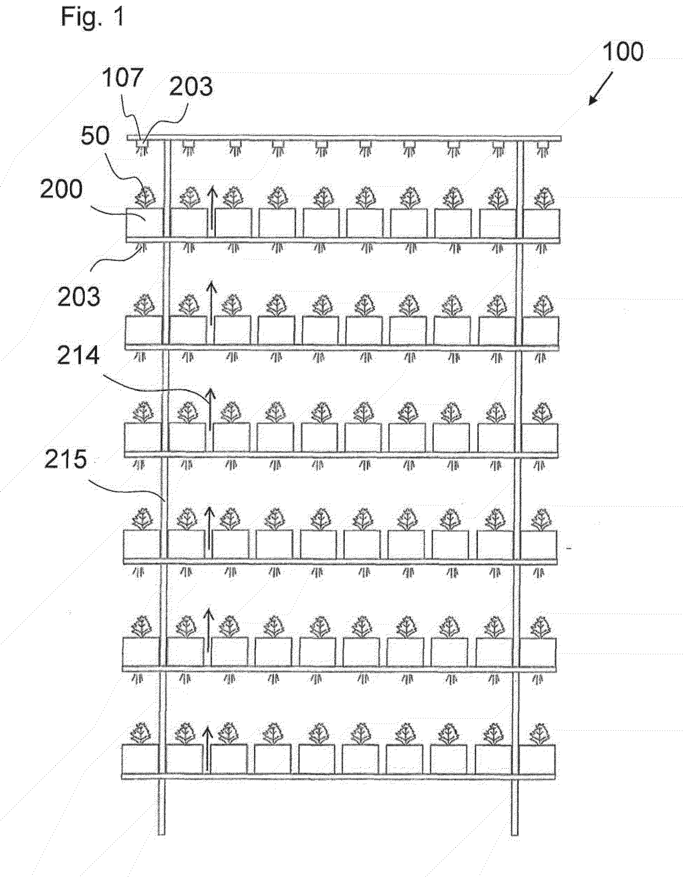

Fig. 1 shows a schematic view of an embodiment of a plant growing system 100 for vertical farming. The plant growing system 100 comprises a number of plant containment devices 200, which are configured to hold at least one plant 50 each. In order to supply the plants 50 with water and nutrients, one or more liquid working media, e.g. a nutrient solution, water, glycerine and/or alcohol are delivered to the plants 50.

The plant containment devices 200 are arranged in a number of vertical layers and, in this embodiment, in a number a horizontal layers by a frame 215. The layers can be categorized into a top layer, a number of middle layers and a bottom layer. The plant containment devices 200 are placed on the top side of panel. On the bottom side of the panels one or more light sources 203 are arranged. The top layer does not comprise plant containment devices 200, but instead a number of lighting devices 107 with light sources 203 to illuminate the plants 50 at the layer below.

For the sake of clarity, only one plant containment device 200, one plant 50, one lighting device 107 and two light sources 203 are indicated with reference signs.

As the light sources 203 must have a high light intensity in order to provide enough light for the plants 50, the light sources 203 will produce a lot of heat. In order to cool the light sources 203 and at the same time regulate the temperature of the air 214 surrounding the plant containment devices 200, the same liquid working medium, which supplies the plants 50 with water and nutrients, is used to absorb the heat generated by the light sources 203 and distribute the heat to the air 214. This is achieved by guiding the liquid working medium through irrigation channels 210 in thermal contact with the light sources 203.

The plant containment devices 200 may be laterally covered by a cover (not shown). In Fig. 1, the cover extends in the image plane. Together with the frame 215, the cover creates a closed environment for a number of plant containment devices 200. In the example shown in Fig. 1, the closed environment contains forty-eight plant containment devices 200 in eight rows and six layers. The air temperature inside the closed environment is regulated by the liquid working medium. This is done by heat transfer between the liquid working medium inside the fluid compartments and irrigation compartments on the one hand and an air flow 214 outside the plant containment devices 200 and the lighting devices 107 on the other hand.

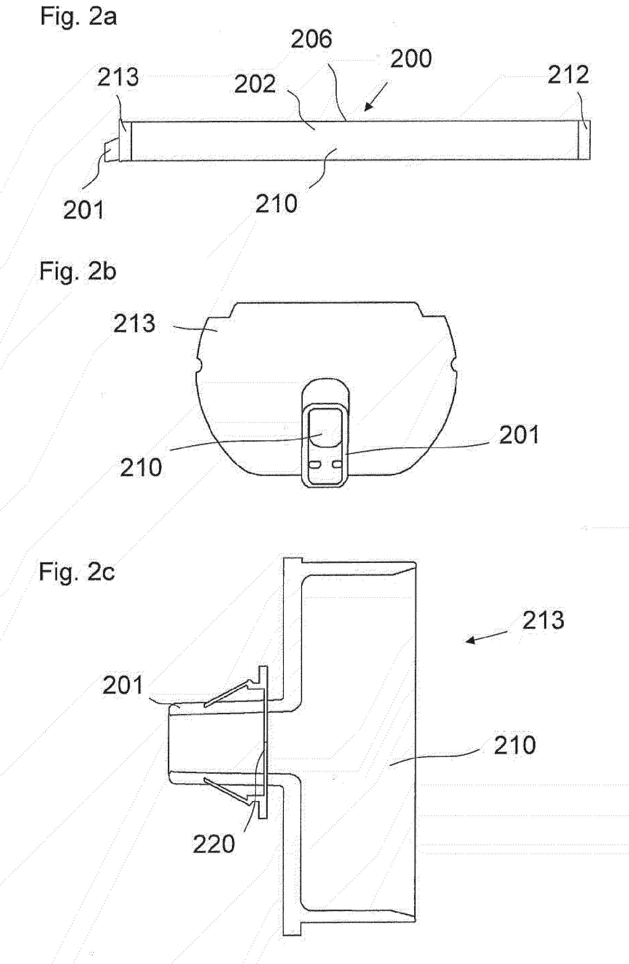

Fig. 2a shows a schematic view of an embodiment of a plant containment device 200 for another embodiment of a plant growing system 100, which utilizes rails instead of panels for supporting the plant containment devices 200. The plant containment device 200 comprises an outer hull 206 made of a thermal conductive material. Even though the plant containment device 200 may comprise an inner hull as well, it is preferred to only have a single hull to improve the heat transfer between the inside and the outside of the plant containment device 200. The plant containment device 200 further comprises a plant holding compartment 202, into which the plants 50 are placed. The plant holding compartment 202 might also contain a medium, for example earth, if the plant containment device 200 is used for a growth technique that requires such medium. The top side of the plant containment device 200 might be open or contain a number of holes along its length to accommodate the plants 50. An irrigation channel 210 runs through the plant holding compartment 202 to supply the plants with a liquid working medium. As an outlet for the liquid working medium, the plant containment device 200 comprises a connection port 201, which is integrated in a front sealing 213 of the plant containment device 200. The connection port 201 is formed as a downwardly sloped nose and is shaped to fit into a drain in a wall of a frame 215. On the opposite side the plant containment device 200 comprises a backside sealing 212, which does not contain a connection port, thus making it easier to exchange the plant containment device 200.

Fig. 2b shows a schematic view of the front sealing 213 with the integrated connection port 201. The connection port 201 connects the irrigation channel 210 running in the inside of the plant containment device 200 with the drain.

Fig. 2c shows a cross sectional view of another embodiment of a front sealing 213 for a plant containment device 200. This embodiment includes a valve 220, that is configured to close, when the inlet flow of the liquid working medium is stopped and the connection port 201 is disconnected. This allows an easy exchange of the plant containment device 200 without the risk of spillage.

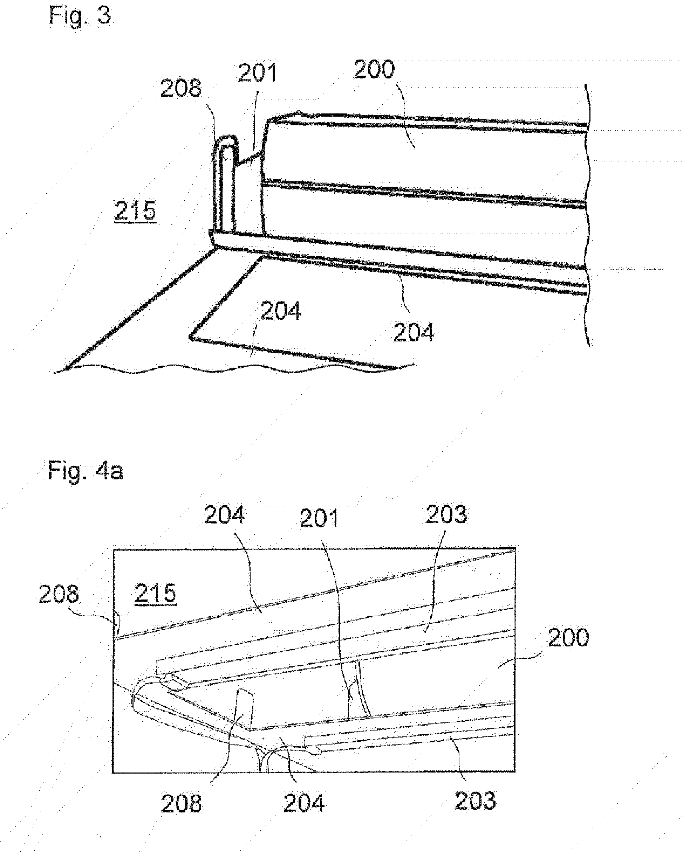

Fig. 3 shows a schematic perspective view of the plant containment device 200 according to Fig. 2a placed on the top side of a rail 204. The rail 204 is shaped as to accommodate the plant containment device 200 without the need of tools. For example, the rail 204 might be formed as a groove with raised side walls shaped complementary to a bottom side of the plant containment device. In another example, the rail 204 might have a flat surface formed to accommodate a plant containment device 200 with a flat bottom side. The rails 204 are part of a frame 215 and extend from a back wall of the frame 215 in a horizontal direction. The back wall of the frame 215 comprises a drain 208 for each rail 204, formed as a hole in the side wall adjacent and slightly above to the rail 204. The drain 208 connects the irrigation channel 210 with a downpipe inside the frame 215, guides the liquid working medium back to a reservoir. The connection port 201 is formed to fit into the drain 208 and comprises a seal to create a watertight connection, so as to avoid spillage. The plant containment device 200 further comprises a connection for an inlet (not shown) to supply the irrigation channel 210 with the liquid working medium from the reservoir. The tube for the inlet is for example guided from below the plant containment device 200 to its top and connects to the front sealing 213. In particular, the inlet is connected to the front sealing 213 with a magnetic lock.

Fig. 4a shows another schematic perspective view of the plant containment device 200 according to Fig. 2a placed on the top side of the rail 204, this time viewed from below. Fig. 4a is framed by a border. The border merely represents the boundary of the shown section of a plant growing system 100 and is not itself part of system and devices depicted in Fig. 4a. In Fig. 4a it is shown, that one or more of the light sources 203, for example LEDs, are fixed to the bottom side of the rails 204. The light sources 203 are supplied with electricity by cables running along or inside the frame 215.

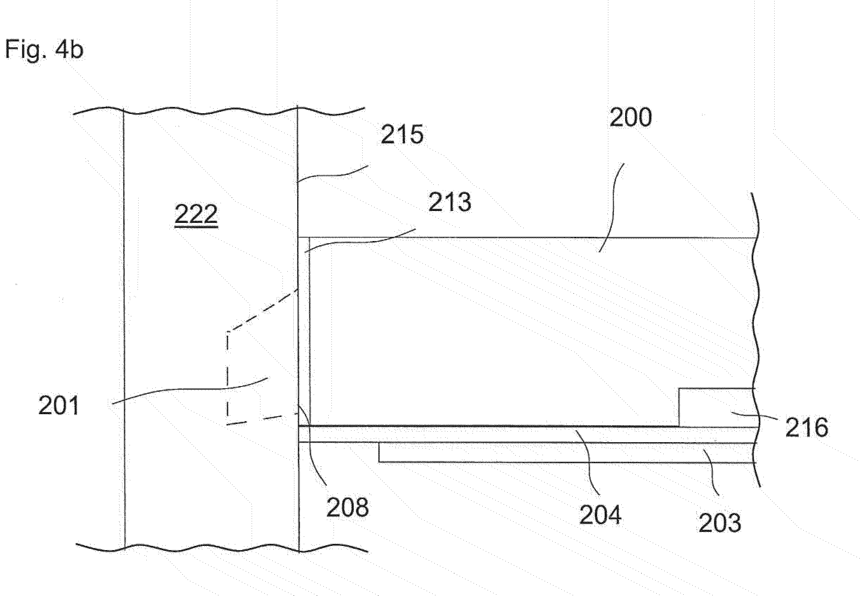

Fig. 4b shows a schematic cross sectional view of the plant containment device 200 according to Fig. 2a connected to the drain 208. The plant containment device 200 is placed on the rail 204, which is shaped as flat surface in this embodiment. To prevent lateral movement of the plant containment device, the rail 204 comprises wings 216 on both sides, only one of which is shown in Fig. 4b. The wings 216 grip the plant containment device 200 from both sides, thus forming a complementary shape to the outer hull 206 of the plant containment device 200. The connection port 201, shown in dashed lines, is pushed into the drain 208 top form the watertight connection. The liquid working medium that exits the plant containment device 200 runs through the connection port 201 into the downpipe 222 inside the frame 215, where it runs down an inner wall of the downpipe 222. As the inner wall is made of a thermal conductive material, for example aluminium, this further increases the heat exchange between the liquid working medium and the air 214 in the plant growing system 100.

In a plant growing system 100 utilizing the plant containment devices 200 and the rails 204 according to Fig. 2a to 4b, a single frame 215 comprises multiple layers of rails 204, arranged vertical above one another. Each layer of rails 204 comprises multiple rails 204 arranged parallel to each other, as indicated in Fig. 3 and 4. On each of the rails 204 a plant containment device 200 containing multiple plants 50 is placed. The illumination for the plants 50 is provided by the light sources 203 from the rail layers directly above the plants, or, in case of the top layer, from the top level lighting devices 107. The rail 204 comprises a thermal spreader material, for example a metal with good thermal conduction. In this way, the heat produced by the light sources 203 is transferred from the light sources 203 through the thermal spreader material and the outer hull 206 of the plant containment device 200 to the liquid working medium inside the irrigation channel 210.

The plant containment devices 200 can be easily exchanged, for example to harvest the plants. To do so, an inflow of the liquid working medium is closed. Then, the connection port 201 is disconnected from the drain 208 by pulling the plant containment device 200. This also disconnects magnetic lock from the inlet to the front sealing 213. The plant containment device 200 can now be easily removed from the rail, as there are no fixture elements to connect the plant containment device 200 to the rail 204. As the light sources 203 are fixed to the rails 204 rather than to the plant containment devices 200, no electrical connection has to be disconnected.

After removing the plant containment device 200, another plant containment device 200 with new plants 50 to be grown is placed on the rail 204 and the connection port 201 is pushed into the drain 208 to create a watertight connection. Now the flow can be reopened to supply the liquid working medium to the irrigation channel 210 of the new plant containment device 200. In this way, plant containment devices 200 can be exchanged in a few simple steps.

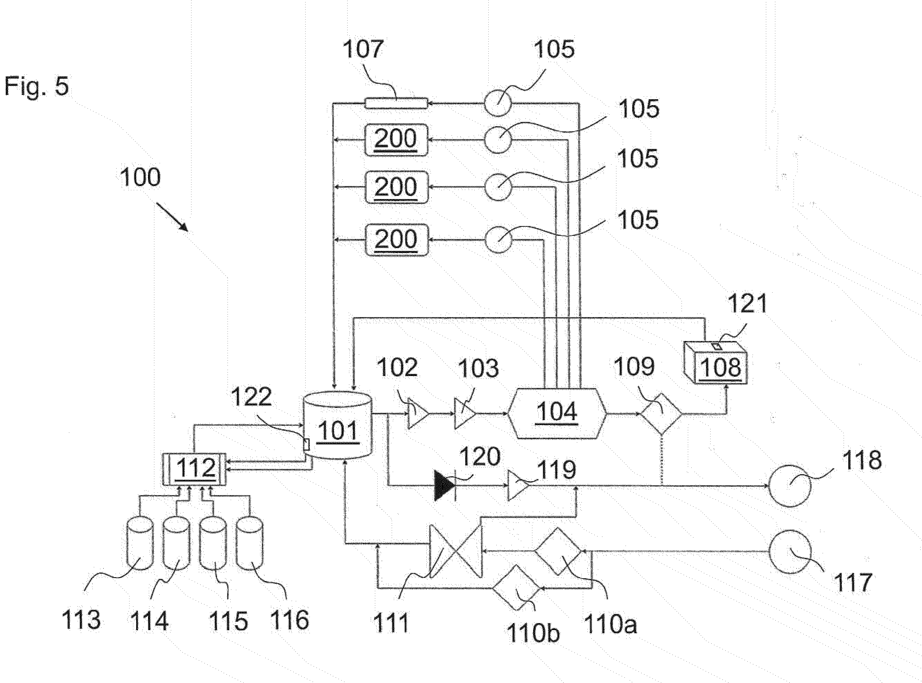

The liquid working medium cycled through the irrigation channels 210 of the plant containment devices 200 does not only supply water and nutrients to the plants 50. It is also used to control the temperature of the air 214 surrounding the plant containment devices 200. The temperature of the liquid working medium is regulated to a desired value, as will be explained in connection with Fig. 5. The liquid working medium inside the irrigation channels 210 is in thermal contact with the outside air 214. If the liquid working medium is cooler than the air 214, it will cool down the air temperature. If the liquid working medium is warmer than the air 214, it will act as a heat source to increase the air temperature. This allows a regulation of the air temperature inside the plan growing system 100 without the need of an air conditioning device. In particular, the entire frame 215 of the plant growing system 100 is enclosed in a hull or cover to better control the temperature of the air 214.

Fig. 5 shows a schematic view of an irrigation cycle and a cooling cycle of an embodiment of a plant growing system 100 for vertical farming. The plant growing system 100 comprises a reservoir 101 that stores the liquid working medium, e.g. a nutrient solution and/or water. During the operation of the system, a main pump 103 pumps the liquid working medium through a filter 102 to a distributor device 104. The distributor device 104 distributes the liquid working medium through a number of flow sensors 105 to the plant containment devices 200 and the lighting devices 107. The distributor device 104 may be equipped with manual and/or motorized ball valves as well as flow sensors to distribute and/or regulate the liquid mass flow as needed. The flow sensors 105 measure the flow rate of the liquid working medium, which allows the system 100 to regulate the flow of the liquid working medium to the individual plant containment devices 200 and lighting devices 107. Inside the plant containment devices 200 the liquid working medium is utilized to supply water and/or nutrients to the plants 50. Additionally, the liquid working medium regulates the temperature of the air surrounding the plant containment devices 200. It also cools the light sources 203 arranged on the rails 204 below the plant containment devices 200 and the top level lighting devices 107. From the plant containment devices 200 and the lighting devices 107, the liquid working medium is cycled back to the reservoir 101. The reservoir 101, the filter 102, the main pump 103, the distributor device 104, the flow sensors 105, the plant containment devices 200 and the lighting devices 107 form the irrigation cycle of the plant growing system 100 in the embodiment shown in Fig. 5.

The distributor device 104 also distributes the liquid working medium to a cooling and heating device 108. The cooling and heating device 108 regulates the liquid working media temperature in the system 100, for example to a temperature between 10°C and 30°C. The cooling and heating device 108 is configured to cool and also heat the liquid working medium. In particular, the cooling and heating device 108 is a temperature management device or is part of a temperature management device, which might also comprise a HVAC. The cooling and heating device 108 is in particular resistant to corrosion. In particular, the cooling device 108 comprises at least one temperature sensor 121 to measure the temperature of the liquid working medium. If the measured temperature is outside a specified temperature range, the temperature is adjusted by the cooling and heating device 108.

From the cooling and heating device 108, the liquid working medium is cycled back to the reservoir 101. Thus, the reservoir 101, the filter 102, the main pump 103, the distributor device 104 and the cooling and heating device 108 form the cooling cycle in the shown embodiment. The cooling cycle ensures that the temperature of the liquid working medium inside the reservoir 101 stays at a desired level. As the volume of the liquid working medium inside the reservoir 101 is large compared to the volume of the liquid working medium inside the plant containment devices 200 and lighting devices 107, fluctuations of the temperature of the liquid working medium inside the reservoir 101 are prevented. This ensures that the liquid working medium pumped to the plants 50 can carry enough oxygen to supply the plants 50. In this way, cooled water from the cooling and heating device 108 does not need to be pumped directly to the plants.

The system 100 in Fig. 5 further comprises a water mixing device 112 with four substance containers 113, 114, 115, 116 containing chemical substances, for example a fertilizer liquid, a pH down substance, a pH up substance, a pathogen and/or a cleaner. However, the water mixing device 112 may comprise more substance containers, for example six or ten containers with different substances or different compositions of substances. The water mixing device 112 comprises liquid property sensors 122 to measure liquid properties, in particular chemical parameters, for example a pH value and/or an electric conductivity, of the liquid working medium inside the reservoir 101. If one of the measured values of the liquid properties is outside a specified range, the water mixing device 112 adds a specified quantity of at least one of the chemical substances to the liquid working medium, until the measured value of the liquid property is inside the specified range.

In order to remove waste or contaminated liquid working medium from the system 100, the system 100 comprises an outlet 118. Though a three-way valve 109 the liquid working medium can either be directed to the cooling and heating device 108 or flushed out of the system 100 via the outlet 118. Alternatively or additionally the system comprises a check valve 120 in combination with a waste fluid pump 119 to flush out the liquid working medium to the outlet 118. In this setup the waste fluid pump 119 may also backflush the filter 102 and can remove debris accumulated in the filter 102 out of the system via the outlet 118. When the waste fluid pump 119 is not in use, the check valve 120 prevents air getting sucked back into the main fluid flow from the main pump 103.

For refilling the system 100 with fresh water or other fluids Fig. 5 shows two options. When a two-way valve 110b is opened while another two-way valve 110a is closed, a reverse osmosis filter 111 is bypassed and the reservoir 101 fills up quickly with tap water or another fluid from an inlet 117. This is usually used for flushing or cleaning the system 100, but can also be used as the sole freshwater inlet, if tap water with a low ppm of soluble matter is available or the water is pre-processed externally, for example with reverse osmosis. When normal tap water with a higher ppm of soluble matter is used, the water of fluid is guided through the reverse osmosis filter 111 by opening the two-way valve 110a and closing the two-way valve 110b. In this way, the water or fluid is cleaned and filtered before being transported to the reservoir 101. The reverse osmosis filter 101 may flush filtered-out particles out of the outlet 118.

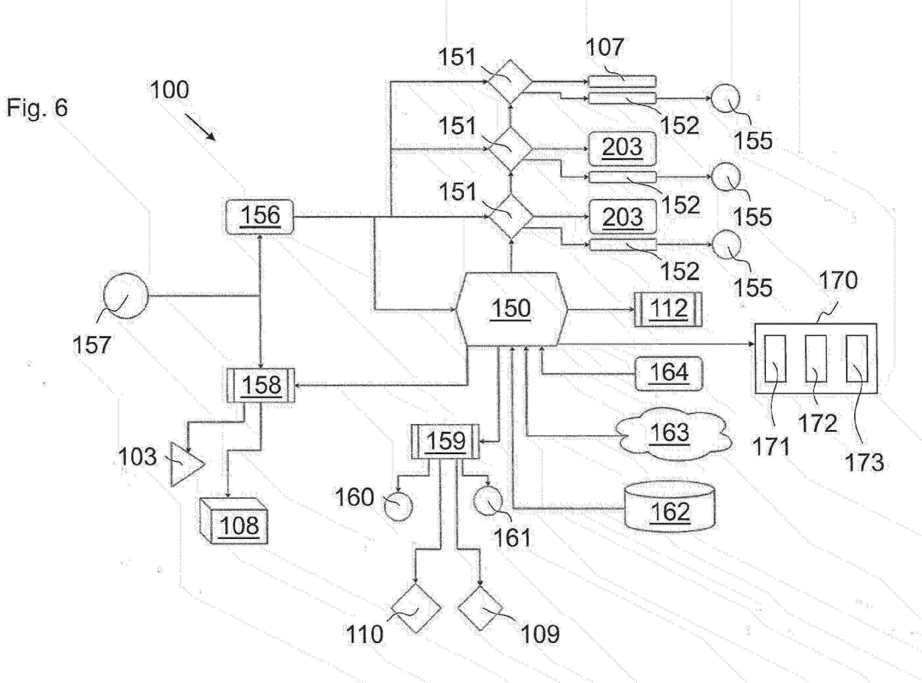

Fig. 6 shows a schematic view of an electrical system of an embodiment of a plant growing system 100 for vertical farming. The system is controlled by a master controller 150, also called main controller, hub or grow hub. The master controller 150 comprises in particular a processor, for example a microcontroller unit (MCU) or a central processing unit (CPU), which may be any type of processor based system. The master controller 150 may further comprise communication devices configured to communicate with other devices, for example via Wi-Fi and/or Bluetooth and/or radio frequency and/or near field communication, and one or more sensors. In particular, the master controller 150 is configured to control and regulate the system, communicate with other devices and systems, act as an fail safe, connect to external submodules and supply electricity with a low voltage to other devices.

Power is supplied to the system in particular via a standard plug 157, for example a 230V 16A fused 50Hz EU style plug. The system 100 comprises a DC power supply 156 to power components and devices requiring 24V, for example the light sources 203. Furthermore, the system 100 might comprise an AC relay board 158, which is controlled by the master controller 150 and supplies components like pumps 103, the cooling and heating device 108 and other loads like humidifiers, air pumps and more with power. The AC relay board is galvanically isolated from the master controller 150. The light sources may also be controlled by AC/DC drivers comprising flyback converters.

According to an embodiment of the invention, multiple layers of rails 204 with light sources 203 are controlled by a single master controller 150. For each layer, the system comprises a spreader board 151, which communicates with the master controller 150 and gets powered directly by the DC power supply 156. Each spreader board 151 connects multiple devices. The devices are for example provided with a DC 24V supply voltage and a signal, e.g. a 3,3V pulse-width modulation (PWM) signal, controlled by the master controller 150. The signal can be used by one or more of the following modules:
- One or more LED drivers, which may be part of the light sources 203 or the lighting devices 107, to provide each light source 203 with power and a current controlled, flicker free and high efficient dimming.
- One or more load drivers 152, which may use the PWM signal to switch an open drain mosfet for loads 155, such as fans or pumps.
- One or more high side switch drivers, which can use the PWM signal to operate a high side switch, which enables a circuit to switch a load via a positive voltage terminal and therefore avoid a floating potential in applications in the fluid cycle, for example in ultrasonic foggers in the reservoir 101.

- One or more other modules, which utilize the voltage present in a way that is controllable by the PWM signal. For example, the other modules may drive various loads or other actuators, for example valves or solenoids.

The system in Fig. 6 further includes a 12V driver board 159, which is utilized to supply a 12V voltage to fans 160, pumps 161, motorized valves, e.g. the three way valve 109, or solenoids, e.g. the two-way valves 110a, 110b. The 12V driver board 159 uses an onboard power supply for 12V on the master controller 150 to distribute the 12V voltage. Furthermore, the 12V driver board 159 uses a PWM signal to drive 12V loads with an open drain configuration or an high side switch (HSS) or any other kind of switching output like push/pull, or half/full bridges for one or more phases.

The master controller 150 may further control the water mixing device 120 and supply it with power. Sensor values for the liquid properties, e.g. the pH value and/or the electrical conductivity value, are acquired and sent to the master controller 150. An algorithm then decides what chemical substances to provide in what quantities and at which time to the reservoir 101.

The system 100 might further comprise one or more sensors 105, 162, 163, 164. One or more liquid sensors 162 acquire information about the fill level in the reservoir 101 as well as the temperature and/or other parameters of the liquid working medium. The liquid sensors 162 might include the temperature sensor 121 and/or the liquid property sensor 122. One or more air sensors 163 acquire information about the air quality and air composition as well as thermodynamic properties, for example air temperature, air humidity, air pressure, CO₂ level, a volatile organic compound (VOC) level and other parameters of the air. One or more light sensors 164 acquire information about the absolute and relative intensity as well as distribution of intensity as well as the spectral properties of the light sources 203. The light sensors 164 enable a precise control of the light in the system 100. In this way, self calibration subsystems and self diagnosis subsystems can be achieved. The aforementioned liquid flow sensors 105 acquire information about the flow rate of the liquid working medium into the different parts of the system 100 to achieve optimal liquid working medium distribution over the system 100. The system may comprise additional sensors connected to the master controller 150, for example a sensor configured to measure the oxygen saturation of the liquid working medium.

The master controller 150 may further control an autonomous actuation device 170, for example a robot 171, a conveyor 172 and/or a transfer trail 173. The autonomous actuation device 170 is configured to move the plant containment devices 200 around the system, plant and harvest plants 50 and/or serve plants 50 to customers.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics. Features which are combined with the wording "in particular" or "especially" are to be treated as preferred embodiments.

### List of References

- 50: plant
- 100: plant growing system
- 101: reservoir
- 102: filter
- 103: pump
- 104: distributor device
- 105: flow sensor
- 107: lighting device
- 108: cooling and heating device
- 109: three-way valve
- 110a: two-way valve
- 110b: two-way valve
- 111: reverse osmosis filter
- 112: water mixing device
- 113, 114, 115, 116: substance container
- 117: inlet
- 118: outlet
- 119: waste fluid pump
- 120: check valve
- 121: temperature sensor
- 122: liquid property sensor
- 150: Master controller
- 151: spreader board
- 152: load driver
- 155: load
- 156: DC power supply
- 157: power plug 24V
- 158: AC relay board
- 159: 12 V driver board
- 160: fan
- 161: pump
- 162: liquid sensor
- 163: air sensor
- 164: light sensor
- 170: autonomous actuation device
- 171: robot
- 172: conveyor
- 173: transfer trail
- 200: plant containment device
- 201: connection port
- 202: plant holding compartment
- 203: light source
- 204: rail
- 206: outer hull
- 208: drain
- 210: irrigation channel
- 211: barrier
- 212: backside sealing
- 213: front sealing
- 214: airflow
- 215: frame
- 216: wing
- 220: valve
- 222: downpipe

## Claims

1. System (100) for vertical farming, comprising at least one plant containment device (200), at least one light source (203) and a frame (215) with at least one rail (204) extending horizontally from a back wall of the frame (215), wherein the at least one plant containment device (200) comprises a plant holding compartment (202) to hold at least one plant (50) and an irrigation channel (210), wherein the at least one light source (203) is arranged on a bottom side of the at least one rail (204), wherein a top side of the rail (204) is shaped complementary to a bottom side of the plant containment device (200), wherein the plant containment device (200) is configured to be arranged on the top side of the rail (204) without fixing it to the rail (204), wherein the plant growing system (100) is configured to control the temperature of the air (214) surrounding the plant containment device (200) by regulating the temperature of a liquid working medium circulated through the irrigation channel (210), **characterised in that** the at least one rail (204) is shaped as a beam extending horizontally from the back wall of the frame (215) in a direction parallel to a flowing direction of a liquid working medium inside the irrigation channel (210), wherein one side of the plant containment device (200) comprises a outwardly protruding, downwardly sloped connection port (210) for the irrigation channel (210), wherein a side wall of the frame (215) comprises a corresponding drain (208) in the shape of a hole, wherein the connection port (201) is shaped and configured to create a watertight connection with the drain (208) when pushed into the drain (208).

2. System (100) according to claim 1, wherein the connection port (201) comprises a valve, which is configured to close, when the connection port (201) is removed from the drain (208).

3. System (100) according to claim 1 or 2, wherein the plant growing system (100) does not comprise an air conditioning device.

4. System (100) according to one of the claims 1 to 3 configured to regulate the temperature of the liquid working medium by controlling the heat output of the at least one light source (203), wherein heat emitted by the at least one light source (203) is transmitted through the rail (204) and an outer hull (206) of the plant containment device (200) to the liquid working medium.

5. System (100) according to one of the claims 1 to 4 comprising a cooling and heating device (108), which is configured to cool and/or heat a liquid working medium circulated through the irrigation channels (210), wherein the plant growing system (100) is configured to measure the temperature of the liquid working medium periodically and activate the cooling and heating device (108), if the temperature of the liquid working medium exceeds a designated maximum temperature and/or falls below a designated minimum temperature.

6. System (100) according to one of the claims 1 to 5 comprising at least two layers of rails (204) arranged vertically above one another, wherein each layer comprises at least two rails (204) extending parallel to each other in a horizontal plane.

7. System (100) according to one of the claims 1 to 6 comprising a reservoir (101), configured to hold at least one liquid working medium, and at least one pump (103), wherein the at least one pump (103) is configured to pump the liquid working medium to the at least one irrigation channel (210) and in particular from the at least one irrigation channel (210) back to the reservoir (101), wherein in particular at least one of the irrigation channels (210) is configured to cool the at least one light source (203).

8. System (100) according to one of the claims 1 to 7 comprising a water mixing device (112) comprising at least one substance container (113, 114, 115, 116) and at least one liquid property sensor (122) configured to measure at least one property of the liquid working medium, in particular a pH and/or an electrical conductivity, wherein the water mixing device (112) is configured to measure a value of the at least one property of the liquid working medium with the at least one liquid property sensor (122) and add at least one substance from the at least one substance container (113, 114, 115, 116) to the liquid working medium, if the value is outside a specified range.

9. System (100) according to one of the claims 1 to 8, wherein the system (100) comprises at least two plant containment devices (200) and is configured to highlight one of the at least two plant containment devices (200), which needs to be serviced, by individually lighting the plant containment device (200) to be highlighted.

10. Method for growing plants (50) with a plant growing system (100) for vertical farming according to one of the claims 1 to 9, wherein the temperature of the air (214) surrounding the plant growing system (100) is controlled by regulating the temperature of a liquid working medium circulated through an irrigation channel (210), which runs through a plant containment device (200) of the plant growing system (100).

11. Method according to claim 10, wherein the temperature of the liquid working medium is regulated by controlling the heat output of at least one light source (203) fixed to a rail (204) of a frame (215) of the plant growing system (100), wherein heat emitted by the at least one light source (203) is transmitted through the rail (204) and an outer hull (206) of the plant containment device (200) to the liquid working medium.

12. Method according to claim 10 or 11, wherein the temperature of the liquid working medium is measured periodically, wherein a cooling and heating device (108), configured to cool and/or heat a liquid working medium circulated through the irrigation channels (210), is activated, if the temperature of the liquid working medium exceeds a designated maximum temperature and/or falls below a designated minimum temperature.

13. Method according to claim 12, wherein the temperature of the liquid working medium is regulated by simulating a day and night cycle with consecutive daytime periods and nighttime periods, with the following steps:
- Activating the at least one light source (203) at the beginning of the daytime period,
- During the daytime period, measuring the temperature of the liquid working medium and cooling the liquid working medium with the cooling and heating device (108), if the temperature of the liquid working medium exceeds a designated daytime maximum temperature,
- Deactivating the at least one light source (203) at the beginning of the nighttime period,
- During the nighttime period, measuring the temperature of the liquid working medium and cooling the liquid working medium with the cooling and heating device (108), if the temperature of the liquid working medium exceeds a designated nighttime maximum temperature
wherein the designated daytime maximum temperature is higher than the designated nighttime maximum temperature.

## Patentansprüche

1. System (100) für vertikale Landwirtschaft, das mindestens eine Pflanzenaufnahmeeinrichtung (200), mindestens eine Lichtquelle (203) und einen Rahmen (215) mit mindestens einer Schiene (204) umfasst, die sich horizontal von einer hinteren Wand des Rahmens (215) erstreckt, wobei die mindestens eine Pflanzenaufnahmeeinrichtung (200) ein Pflanzenhaltefach (202) zum Halten mindestens einer Pflanze (50) und einen Bewässerungskanal (210) umfasst, wobei die mindestens eine Lichtquelle (203) an einer unteren Seite der mindestens einen Schiene (204) angeordnet ist, wobei eine obere Seite der Schiene (204) komplementär zu einer unteren Seite der Pflanzenaufnahmeeinrichtung (200) geformt ist, wobei die Pflanzenaufnahmeeinrichtung (200) so ausgestaltet ist, dass sie an der oberen Seite der Schiene (204) anordbar ist, ohne sie an der Schiene (204) zu befestigen, wobei das Pflanzenzüchtungssystem (100) so ausgestaltet ist, dass es die Temperatur der Luft (214), welche die Pflanzenaufnahmeeinrichtung (200) umgibt, durch Regeln der Temperatur eines flüssigen Arbeitsmittels steuert, das durch den Bewässerungskanal (210) zirkuliert wird, **dadurch gekennzeichnet, dass** die mindestens eine Schiene (204) als ein Balken geformt ist, der sich horizontal von der hinteren Wand des Rahmens (215) in einer Richtung parallel zu einer Strömungsrichtung eines flüssigen Arbeitsmittels im Inneren des Bewässerungskanals (210) erstreckt, wobei eine Seite der Pflanzenaufnahmeeinrichtung (200) einen nach außen hervorstehenden, nach unten geneigten Verbindungsanschluss (210) für den Bewässerungskanal (210) umfasst, wobei eine Seitenwand des Rahmens (215) einen entsprechenden Abfluss (208) in der Form eines Lochs umfasst, wobei der Verbindungsanschluss (201) so geformt und ausgestaltet ist, dass er eine wasserdichte Verbindung mit dem Abfluss (208) schafft, wenn er in den Abfluss (208) geschoben wird.

2. System (100) nach Anspruch 1, wobei der Verbindungsanschluss (201) ein Ventil umfasst, das so ausgestaltet ist, dass es sich schließt, wenn der Verbindungsanschluss (201) von dem Abfluss (208) entfernt wird.

3. System (100) nach Anspruch 1 oder 2, wobei das Pflanzenzüchtungssystem (100) keine Klimaanlage umfasst.

4. System (100) nach einem der Ansprüche 1 bis 3, das so ausgestaltet ist, dass es die Temperatur des flüssigen Arbeitsmittels durch Steuern der Wärmeabgabe der mindestens einen Lichtquelle (203) regelt, wobei Wärme, die von der mindestens einen Lichtquelle (203) ausgestrahlt wird, durch die Schiene (204) und eine äußere Hülle (206) der Pflanzenaufnahmeeinrichtung (200) auf das flüssige Arbeitsmittel übertragen wird.

5. System (100) nach einem der Ansprüche 1 bis 4, das eine Kühl- und Heizeinrichtung (108) umfasst, die so ausgestaltet ist, dass sie ein flüssiges Arbeitsmittel, das durch die Bewässerungskanäle (210) in Umlauf gebracht wird, kühlt und/oder erwärmt, wobei das Pflanzenzüchtungssystem (100) so ausgestaltet ist, dass es die Temperatur des flüssigen Arbeitsmittels periodisch misst und die Kühl- und Heizeinrichtung (108) aktiviert, wenn die Temperatur des flüssigen Arbeitsmittels eine vorgegebene Höchsttemperatur überschreitet und/oder unter eine vorgegebene Mindesttemperatur fällt.

6. System (100) nach einem der Ansprüche 1 bis 5, das mindestens zwei Schichten von Schienen (204) umfasst, die vertikal übereinander angeordnet sind, wobei jede Schicht mindestens zwei Schienen (204) umfasst, die sich parallel zueinander in einer horizontalen Ebene erstrecken.

7. System (100) nach einem der Ansprüche 1 bis 6, das ein Reservoir (101) umfasst, das so ausgestaltet ist, dass es mindestens ein flüssiges Arbeitsmittel und mindestens eine Pumpe (103) hält, wobei die mindestens eine Pumpe (103) so ausgestaltet ist, dass sie das flüssige Arbeitsmittel zu dem mindestens einen Bewässerungskanal (210) und insbesondere von dem mindestens einen Bewässerungskanal (210) zurück zum Reservoir (101) pumpt, wobei insbesondere mindestens einer der Bewässerungskanäle (210) so ausgestaltet ist, dass er die mindestens eine Lichtquelle (203) kühlt.

8. System (100) nach einem der Ansprüche 1 bis 7, das eine Wassermischeinrichtung (112) umfasst, die mindestens einen Substanzbehälter (113, 114, 115, 116) und mindestens einen Flüssigkeitseigenschaftssensor (122) umfasst, der so ausgestaltet ist, dass er mindestens eine Eigenschaft des flüssigen Arbeitsmittels, insbesondere einen pH-Wert und/oder eine elektrische Leitfähigkeit, misst, wobei die Wassermischeinrichtung (112) so ausgestaltet ist, dass sie einen Wert der mindestens einen Eigenschaft des flüssigen Arbeitsmittels mit dem mindestens einen Flüssigkeitseigenschaftssensor (122) misst und die mindestens eine Substanz von dem mindestens einen Substanzbehälter (113, 114, 115, 116) dem flüssigen Arbeitsmittel beimengt, wenn der Wert sich außerhalb eines vorgegebenen Bereichs befindet.

9. System (100) nach einem der Ansprüche 1 bis 8, wobei das System (100) mindestens zwei Pflanzenaufnahmeeinrichtungen (200) umfasst und so ausgestaltet ist, dass es eine der mindestens zwei Pflanzenaufnahmeeinrichtungen (200), die Betreuung benötigen, hervorhebt, indem es die hervorzuhebende Pflanzenaufnahmeeinrichtung (200) einzeln beleuchtet.

10. Verfahren zum Züchten von Pflanzen (50) mit einem Pflanzenzüchtungssystem (100) für vertikale Landwirtschaft nach einem der Ansprüche 1 bis 9, wobei die Temperatur der Luft (214), die das Pflanzenzüchtungssystem (100) umgibt, durch Regeln der Temperatur eines flüssigen Arbeitsmittels gesteuert wird, das durch einen Bewässerungskanal (210) in Umlauf gebracht wird, der durch eine Pflanzenaufnahmeeinrichtung (200) des Pflanzenzüchtungssystems (100) verläuft.

11. Verfahren nach Anspruch 10, wobei die Temperatur des flüssigen Arbeitsmittels durch Steuern der Wärmeabgabe mindestens einer Lichtquelle (203) geregelt wird, die an einer Schiene (204) eines Rahmens (215) des Pflanzenzüchtungssystems (100) befestigt ist, wobei Wärme, die von der mindestens einen Lichtquelle (203) ausgestrahlt wird, durch die Schiene (204) und eine äußere Hülle (206) der Pflanzenaufnahmeeinrichtung (200) auf das flüssige Arbeitsmittel übertragen wird.

12. Verfahren nach Anspruch 10 oder 11, wobei die Temperatur des flüssigen Arbeitsmittels periodisch gemessen wird, wobei eine Kühl- und Heizeinrichtung (108), die dazu ausgestaltet ist, ein flüssiges Arbeitsmittel, das durch die Bewässerungskanäle (210) in Umlauf gebracht wird, zu kühlen und/oder zu erwärmen, aktiviert wird, wenn die Temperatur des flüssigen Arbeitsmittels eine vorgegebene Höchsttemperatur überschreitet und/oder unter eine vorgegebene Mindesttemperatur fällt.

13. Verfahren nach Anspruch 12, wobei die Temperatur des flüssigen Arbeitsmittels durch Simulieren eines Tag-und-Nachtzyklus mit aufeinanderfolgenden Tagperioden und Nachtperioden mit den folgenden Schritten geregelt wird:
- Aktivieren der mindestens einen Lichtquelle (203) zu Beginn der Tagesperiode,
- während der Tagesperiode, Messen der Temperatur des flüssigen Arbeitsmittels und Kühlen des flüssigen Arbeitsmittels mit der Kühl- und Heizeinrichtung (108), wenn die Temperatur des flüssigen Arbeitsmittels eine vorgegebene Tageshöchsttemperatur überschreitet,
- Deaktivieren der mindestens einen Lichtquelle (203) zu Beginn der Nachtperiode,
- während der Nachtperiode, Messen der Temperatur des flüssigen Arbeitsmittels und Kühlen des flüssigen Arbeitsmittels mit der Kühl- und Heizeinrichtung (108), wenn die Temperatur des flüssigen Arbeitsmittels eine vorgegebene Nachthöchsttemperatur überschreitet,
wobei die vorgegebene Tageshöchsttemperatur höher als die vorgegebene Nachthöchsttemperatur ist.

## Revendications

1. Système (100) pour agriculture verticale, comprenant au moins un dispositif (200) pour contenir des végétaux, au moins une source de lumière (203) et un bâti (215) avec au moins un rail (204) s'étendant horizontalement depuis une paroi arrière du bâti (215), ledit au moins un dispositif (200) pour contenir des végétaux comprenant un compartiment (202) de maintien de végétaux pour contenir au moins un végétal (50) et un canal d'irrigation (210), ladite au moins une source de lumière (203) étant agencée sur un côté inférieur dudit au moins un rail (204), un côté supérieur du rail (204) ayant une forme complémentaire à un côté inférieur du dispositif (200) pour contenir des végétaux, le dispositif (200) pour contenir des végétaux étant configuré pour être disposé sur le côté supérieur du rail (204) sans le fixer au rail (204), le système (100) de culture de végétaux étant configuré pour contrôler la température de l'air (214) entourant le dispositif (200) pour contenir des végétaux par la régulation de la température d'un milieu de travail liquide mis en circulation à travers le canal d'irrigation (210), **caractérisé en ce que** ledit au moins un rail (204) a la forme d'une poutre s'étendant horizontalement depuis la paroi arrière du bâti (215) dans une direction parallèle à une direction d'écoulement d'un milieu de travail liquide à l'intérieur du canal d'irrigation (210), un côté du dispositif (200) pour contenir des végétaux comprenant un orifice de raccordement (210) faisant saillie vers l'extérieur et incliné vers le bas pour le canal d'irrigation (210), une paroi latérale du bâti (215) comprenant un drain correspondant (208) sous la forme d'un trou, l'orifice de connexion (201) étant formé et configuré de façon à créer une connexion étanche avec le drain (208) lorsqu'il est poussé dans le drain (208).

2. Système (100) selon la revendication 1, dans lequel l'orifice de raccordement (201) comprend une vanne, qui est configurée pour se fermer, lorsque l'orifice de raccordement (201) est retiré du drain (208).

3. Système (100) selon la revendication 1 ou la revendication 2, le système (100) de culture de végétaux ne comprenant pas de dispositif de climatisation.

4. Système (100) selon l'une des revendications 1 à 3, configuré pour réguler la température du milieu de travail liquide en contrôlant la puissance calorifique de ladite au moins une source de lumière (203), la chaleur émise par ladite au moins une source de lumière (203) étant transmise au milieu de travail liquide à travers le rail (204) et une coque extérieure (206) du dispositif (200) pour contenir des végétaux.

5. Système (100) selon l'une des revendications 1 à 4, comprenant un dispositif (108) de refroidissement et de chauffage, qui est configuré pour refroidir et/ou chauffer un milieu de travail liquide mis en circulation à travers les canaux d'irrigation (210), le système (100) de culture de végétaux étant configuré pour mesurer périodiquement la température du milieu de travail liquide et activer le dispositif (108) de refroidissement et de chauffage si la température du milieu de travail liquide dépasse une température maximale désignée et/ou tombe en dessous d'une température minimale désignée.

6. Système (100) selon l'une des revendications 1 à 5, comprenant au moins deux couches de rails (204) agencés verticalement l'un au-dessus de l'autre, chaque couche comprenant au moins deux rails (204) s'étendant parallèlement l'un à l'autre dans un plan horizontal.

7. Système (100) selon l'une des revendications 1 à 6, comprenant un réservoir (101), configuré pour contenir au moins un milieu de travail liquide, et au moins une pompe (103), ladite au moins une pompe (103) étant configurée pour pomper le milieu de travail liquide vers ledit au moins un canal d'irrigation (210) et en particulier depuis ledit au moins un canal d'irrigation (210) vers le réservoir (101), en particulier au moins l'un des canaux d'irrigation (210) étant configuré pour refroidir ladite au moins une source de lumière (203).

8. Système (100) selon l'une des revendications 1 à 7, comprenant un dispositif (112) de mélange d'eau comprenant au moins un réservoir de substance (113, 114, 115, 116) et au moins un capteur (122) de propriété de liquide configuré pour mesurer au moins une propriété du milieu de travail liquide, en particulier un pH et/ou une conductivité électrique, le dispositif (112) de mélange d'eau étant configuré pour mesurer une valeur de ladite au moins une propriété du milieu de travail liquide avec ledit au moins un capteur (122) de propriété de liquide et pour ajouter au milieu de travail liquide au moins une substance depuis ledit au moins un récipient de substance (113, 114, 115, 116), si la valeur est en dehors d'une plage spécifiée.

9. Système (100) selon l'une des revendications 1 à 8, le système (100) comprenant au moins deux dispositifs (200) pour contenir des végétaux et étant configuré pour mettre en évidence l'un desdits au moins deux dispositifs (200) pour contenir des végétaux, qui doivent faire l'objet d'un service, en éclairant individuellement le dispositif (200) pour contenir des végétaux devant être mis en évidence.

10. Procédé de culture de végétaux (50) avec un système (100) de culture de végétaux pour agriculture verticale selon l'une des revendications 1 à 9, dans lequel la température de l'air (214) entourant le système (100) de culture de végétaux est contrôlée par le fait de réguler la température d'un milieu de travail liquide mis en circulation à travers un canal d'irrigation (210), qui traverse un dispositif (200) pour contenir des végétaux du système (100) de culture de végétaux.

11. Procédé selon la revendication 10, dans lequel la température du milieu de travail liquide est régulée en contrôlant la puissance calorifique d'au moins une source de lumière (203) fixée à un rail (204) d'un bâti (215) du système (100) de culture de végétaux, la chaleur émise par ladite au moins une source de lumière (203) étant transmise au milieu de travail liquide à travers le rail (204) et une coque extérieure (206) du dispositif (200) pour contenir des végétaux.

12. Procédé selon la revendication 10 ou la revendication 11, dans lequel la température du milieu de travail liquide est mesurée périodiquement, un dispositif (108) de refroidissement et de chauffage, configuré pour refroidir et/ou chauffer un milieu de travail liquide mis en circulation à travers les canaux d'irrigation (210), étant activé si la température du milieu de travail liquide dépasse une température maximale désignée et/ou tombe en dessous d'une température minimale désignée.

13. Procédé selon la revendication 12, dans lequel la température du milieu de travail liquide est régulée en simulant un cycle de jour et de nuit avec des périodes diurnes et des périodes nocturnes consécutives, avec les étapes suivantes :
- activation de ladite au moins une source de lumière (203) au début de la période diurne,
- pendant la période diurne, mesure de la température du milieu de travail liquide et refroidir le milieu de travail liquide avec le dispositif (108) de refroidissement et de chauffage si la température du milieu de travail liquide dépasse une température maximale diurne désignée,
- désactivation de ladite au moins une source de lumière (203) au début de la période nocturne,
- pendant la période nocturne, mesure de la température du milieu de travail liquide et refroidissement du milieu de travail liquide avec le dispositif (108) de refroidissement et de chauffage si la température du milieu de travail liquide dépasse une température maximale nocturne désignée,
la température maximale diurne désignée étant supérieure à la température maximale nocturne désignée.
